# EUROPÄISCHE PATENTSCHRIFT

(11) **EP 4 353 629 B1**
(45) Veröffentlichungstag und Bekanntmachung des Hinweises auf die Patenterteilung: **22.04.2026**
(21) Anmeldenummer: 22201265.0
(22) Anmeldetag: 13.10.2022
(51) Int. Cl.: B65G 1/04, B65G 1/133, B65G 1/12, B65G 54/02

(54) **LAGERANORDNUNG**
BEARING ARRANGEMENT
ENSEMBLE DE PALIER

(43) Veröffentlichungstag der Anmeldung: 17.04.2024
(73) Patentinhaber: SOMIC Verpackungsmaschinen GmbH & Co. KG, 83123 Amerang (DE)
(72) Erfinder: KÖGEL, Christoph, 83128 Prutting (DE); EDER, Norbert, 83278 Traunstein (DE); HÄRTL, Johann, 83101 Rohrdorf (DE)
(74) Vertreter: Weickmann & Weickmann PartmbB

(56) Entgegenhaltungen:
- EP-A1- 2 248 740
- US-A1- 2020 030 995

## Beschreibung

Die Erfindung betrifft eine Lageranordnung zum Lagern von nicht zur Lageranordnung gehörenden Movern einer in Magnetschwebetechnologie ausgebildeten, ebenfalls nicht zur Lageranordnung gehörenden Fördervorrichtung, die Lageranordnung umfassend eine Speichervorrichtung mit einer Mehrzahl von in Höhenrichtung übereinander angeordneten Lagerebenen mit jeweils einer Mehrzahl von Lagerorten und eine Transfervorrichtung, die dazu ausgebildet ist, wenigstens einen der Mover von einer Arbeitsfläche der Fördervorrichtung in wenigstens einen der Lagerorte oder von wenigstens einem der Lagerorte auf die Arbeitsfläche der Fördervorrichtung zu transferieren, wobei die Lageranordnung aus einem nicht magnetisierbaren Material gefertigt ist.

Um einer derartigen Fördervorrichtung Mover zuführen bzw. von dieser abführen zu können, ist üblicherweise menschliches Eingreifen erforderlich. Die Mover müssen von Hand aus der Speichervorrichtung entnommen und auf die Fördervorrichtung gesetzt bzw. von Hand von der Fördervorrichtung abgenommen und in der Speichervorrichtung platziert werden. Ein Problem, das sich bei einem derartigen händischen Moverwechsel stellt, ist der Umgang mit den Magnetfeldern, die von den in den Movern verbauten Permanentmagneten ausgehen. Diese Magnetfelder sind so stark, dass beispielsweise Personen mit Herzschrittmachern den Moverwechsel nicht durchführen dürfen bzw. dass schon von dem Metallarmband einer Uhr ein Verletzungsrisiko für die den Moverwechsel vornehmende Bedienungsperson ausgeht.

Um dieses Risiko zu minimieren bzw. vollständig auszuschließen, wurde in den Figuren 36 und 37 der gattungsbildenden US 2020/0030995 A1 eine Lageranordnung zum automatisierten Moverwechsel vorgeschlagen. Die Speichervorrichtung dieser Lageranordnung verfügt über eine Mehrzahl von übereinander angeordneten Lagerebenen, von denen jede wiederum eine Mehrzahl von Lagerorten für Mover aufweist. Um einen Mover in einer bestimmten der Lagerebenen einlagern bzw. aus ihr entnehmen zu können, wird die Speichervorrichtung solange in der Höhenrichtung verstellt, bis sich die fragliche Lagerebene auf der Höhe der Arbeitsfläche der Fördervorrichtung befindet. Erst wenn dies der Fall ist, wird die sich auf der Höhe der Arbeitsfläche der Fördervorrichtung befindende Transfervorrichtung aktiviert.

Bei der gattungsbildenden Lageranordnung hat es sich in der Praxis gezeigt, dass der Einlagerungs- bzw. Entnahmevorgang relativ viel Zeit in Anspruch nimmt.

Aufgabe der vorliegenden Erfindung ist es, hier Abhilfe zu schaffen.

Diese Aufgabe wird durch eine Lageranordnung der eingangs genannten Art gelöst, bei welcher die Lagerorte der Speichervorrichtung in Höhenrichtung fest angeordnet sind und die Transfervorrichtung eine in Höhenrichtung verstellbare Transfereinheit umfasst.

Es ist das Verdienst der Erfinder, erkannt zu haben, dass die niedrige Geschwindigkeit des Einlagerns bzw. Entnehmens der Mover unter anderem daran liegt, dass zur Ansteuerung der einzelnen Lagerebenen immer die gesamte Lageranordnung einschließlich der gerade in ihr eingelagerten Mover in der Höhenrichtung bewegt werden muss. Durch die erfindungsgemäßen Maßnahmen kann die zu bewegende Masse deutlich reduziert werden, was sich nicht nur auf die für das Einlagern bzw. das Entnehmen eines Movers erforderliche Zeit vorteilhaft auswirkt, sondern auch auf den mit diesem Vorgang verbundenen Energiebedarf.

Um das Einlagern bzw. Entnehmen eines Movers weiter beschleunigen zu können, wird ferner vorgeschlagen, dass jene Teile der Lageranordnung, deren Abstand zu den Movern im Betrieb einen vorbestimmten Wert unterschreiten kann, vorzugsweise die gesamte Lageranordnung, aus einem Material gefertigt sind, dessen elektrische Leitfähigkeit einen vorbestimmten Grenzwert nicht überschreitet, vorzugsweise aus einem elektrisch nicht leitfähigen Material. Da das bei der Einlagerung bzw. der Entnahme eines Movers bewegte Magnetfeld der Permanentmagneten des Movers in einem elektrisch leitfähigen Material Wirbelströme induziert, welche die Bewegung des Movers abzubremsen versuchen, erschwert die Verwendung von elektrisch leitfähigen Materialien das Einlagern bzw. Entnehmen der Mover selbst dann, wenn diese leitfähigen Materialien nicht magnetisch sind. Diesem Effekt wird durch die erfindungsgemäße Maßnahme entgegengewirkt. Da der Wirbelstrombremseneffekt mit dem Abstand zwischen dem elektrisch leitfähigen Material und dem bewegten Magnetfeld abnimmt, kann beispielsweise ein Rahmen der Speichervorrichtung, der stets einen gewissen Abstand von den Movern aufweist, durchaus aus einem metallischen, aber nicht magnetischen Material gefertigt sein, beispielsweise Aluminium. Für alle anderen Teile der Lageranordnung empfiehlt sich jedoch beispielsweise die Verwendung von Kunststoffen.

Gemäß einer ersten alternativen Ausgestaltung der Erfindung wird vorgeschlagen, dass die Lagerorte der Speichervorrichtung in wenigstens einer von der Höhenrichtung verschiedenen Richtung verstellbar sind. Durch diese Maßnahme vereinfacht sich die Konstruktion der Lageranordnung, da die Bewegungen der Lagerorte in der Speichervorrichtung und der Transfervorrichtung voneinander entkoppelt werden können.

Beispielsweise kann vorgesehen sein, dass die Verstellbarkeit der Lagerorte derart ausgebildet ist, dass die Lagerorte in einer von der Transfervorrichtung weg bzw. auf diese zu weisenden linearen Richtung bewegbar sind. Dies ermöglicht zwar nur ein Einlagern und Entnehmen nach dem LIFO-Prinzip (Last In First Out). Da aber bei einem Formatwechsel üblicherweise eine große Anzahl von identischen Movern eines ersten Typs durch eine große Anzahl von identischen Movern eines zweiten Typs ersetzt wird, stellt dies in der Praxis keine Einschränkung dar.

Um auf jeden Lagerort individuell zugreifen zu können, kann die Verstellbarkeit der Lagerorte aber auch derart ausgebildet sein, dass die Lagerorte längs einer an der Transfervorrichtung vorbeiführenden in sich geschlossenen Bahn bewegbar sind. Die Speichervorrichtung kann in diesem Fall beispielsweise als Speicherkarussell ausgebildet sein.

Gemäß einer zweiten alternativen Ausgestaltung der Erfindung kann aber auch vorgesehen sein, dass die Transfereinheit der Transfervorrichtung neben der Verstellbarkeit in Höhenrichtung auch in wenigstens einer von der Höhenrichtung verschiedenen Richtung verstellbar ist. Diese Ausgestaltung kann in konstruktiv an sich bekannter Weise nach Art einer in die Vertikale aufgerichteten X-Y-Verstellung ausgebildet sein. Die Lagerorte in der Speichervorrichtung können in diesem Fall starr angeordnet sein. Beispielsweise kann die Speichervorrichtung nach Art eines Regals mit einer Mehrzahl von übereinander angeordneten Regalbrettern ausgebildet sein.

Gemäß einer dritten alternativen Ausgestaltung der Erfindung kann aber auch vorgesehen sein, dass die Transfervorrichtung eine Mehrzahl von, vorzugsweise gemeinsam, in Höhenrichtung verstellbaren Transfereinheiten aufweist. Auch in diesem Fall kann die Speichervorrichtung nach Art eines Regals mit einer Mehrzahl von übereinander angeordneten Regalbrettern ausgebildet sein. Dabei kann die Mehrzahl von Transfereinheiten jeweils eine entsprechende Mehrzahl von Movern gleichzeitig auf einem der Regalbretter einlagern bzw. von diesem entnehmen.

In Weiterbildung der Erfindung kann ferner vorgesehen sein, dass die Speichervorrichtung mobil ausgebildet ist. Dabei bezeichnet das Wort "mobil" im Zusammenhang mit der vorliegenden Erfindung keine Bewegung der Speichervorrichtung in sich, wie sie beispielsweise bei der Ausbildung als Lagerort-Karussell vorliegt, sondern eine Bewegung der Speichervorrichtung als Ganzes von der Fördervorrichtung weg bzw. zu dieser hin. Eine derartige Mobilität ermöglicht es, die im Zuge eines Formatwechsels in der Speichervorrichtung eingelagerten Mover von der Fördervorrichtung zu entfernen, was die Zugänglichkeit der Fördervorrichtung im Förderbetrieb verbessert. Selbstverständlich kann die mobile Speichervorrichtung für einen späteren erneuten Formatwechsel wieder zu der Fördervorrichtung hin bewegt werden.

In diesem Zusammenhang, aber nicht nur in diesem Zusammenhang, kann es vorteilhaft sein, wenn dass die Speichervorrichtung zumindest teilweise von Begrenzungswandungen umhüllt ist. Diese Begrenzungswandungen können beispielsweise ein Herausfallen der Mover aus den Lagerorten verhindern. Aus einem Speicherregal wird in diesem Fall ein Speicherschrank.

Um die Mover zuverlässig und reproduzierbar zu den Lagerorten bzw. aus diesen transferieren zu können, wird vorgeschlagen, dass die Transfereinheit ein Greiferelement aufweist. Dieses Greiferelement kann beispielsweise von einem Sauggreifer gebildet sein.

In Weiterbildung der Erfindung kann ferner vorgesehen sein, dass jeder Lagerort zur Aufnahme einer Mehrzahl von Movern ausgebildet ist. Diese Ausgestaltung erfordert lediglich, dass das Greiferelement der Transfereinheit jede der Lagerflächen des Lagerorts bedienen kann.

Die Erfindung wird im Folgenden anhand von Ausführungsbeispielen mit Bezug auf die begleitenden Zeichnungen näher erläutert werden.

Es stellt dar:
- Figur 1: eine perspektivische Ansicht eines ersten Ausführungsbeispiels einer erfindungsgemäßen Lageranordnung;
- Figur 2: eine perspektivische Ansicht eines zweiten Ausführungsbeispiels einer erfindungsgemäßen Lageranordnung;
- Figur 3: eine perspektivische Ansicht eines dritten Ausführungsbeispiels einer erfindungsgemäßen Lageranordnung; und
- Figur 4: eine perspektivische Ansicht einer Variante des dritten Ausführungsbeispiels.

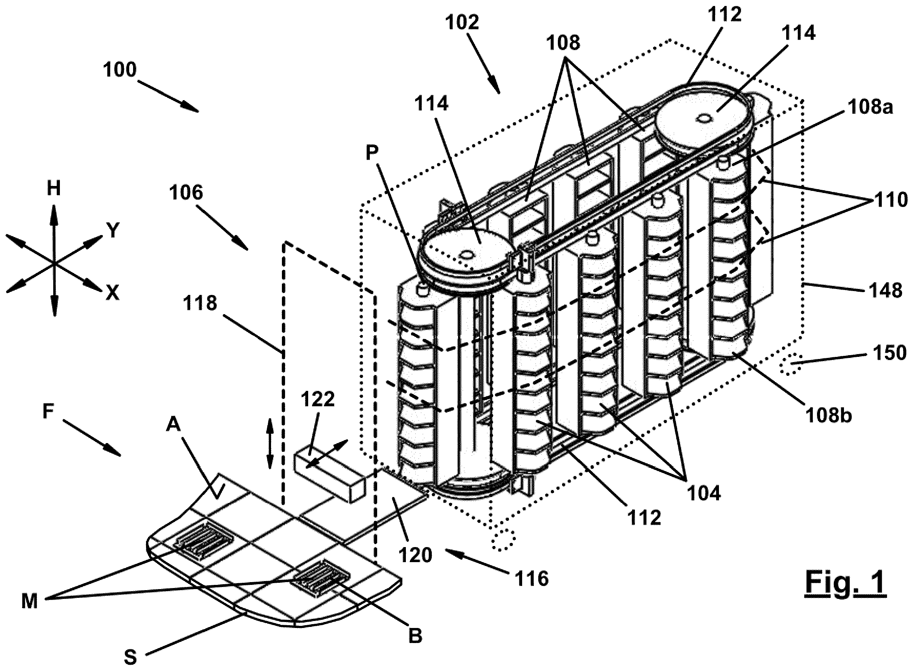

In Figur 1 ist eine erfindungsgemäße Lageranordnung ganz allgemein mit 100 bezeichnet. Die Lageranordnung 100 ist einer in Magnetschwebetechnologie ausgebildeten Fördervorrichtung F zugeordnet.

Die Fördervorrichtung F umfasst eine Statoranordnung S, deren Oberfläche eine Arbeitsfläche A der Fördervorrichtung F bildet, sowie eine Mehrzahl von Movern M, von denen in Figur 1 der Übersichtlichkeit halber lediglich zwei dargestellt sind. Die Mover M sind jeweils mit einer Mehrzahl von Permanentmagneten bestückt, die mit einem von der Statoranordnung S erzeugten Magnetfeld wechselwirken. Durch entsprechende Ansteuerung der Statoranordnung S und damit Steuerung des Magnetfelds können die Mover M von der Arbeitsfläche A abgehoben und schwebend längs dieser bewegt werden.

Zum Transport von Produkten sind die Mover M üblicherweise mit Auflagen B bestückt, deren konstruktive Auslegung an die Anzahl und die Gestalt der jeweiligen Produkte angepasst ist. Bei einem Formatwechsel, d.h. dem Übergang von einem ersten Produkttyp zu einem zweiten Produkttyp, müssen die Mover, die sich gerade auf der Arbeitsfläche befinden, gegen Mover ausgetauscht werden, deren Auflagen B an den zweiten Produkttyp angepasst sind. Dies wird durch die erfindungsgemäße Lageranordnung 100 erleichtert.

Hierzu umfasst die Lageranordnung 100 eine Speichervorrichtung 102 mit einer Mehrzahl von Lagerorten 104 und eine Transfervorrichtung 106, die dazu ausgebildet ist, Mover für Mover von der Arbeitsfläche A in wenigstens einen der Lagerorte 104 zu transferieren oder umgekehrt.

Bei der in Figur 1 dargestellten Ausführungsform ist die Speichervorrichtung 102 nach Art eines Karussells ausgebildet. Insbesondere umfasst die Speichervorrichtung 102 eine Mehrzahl von vertikalen Stapeln 108, von denen jeder eine Mehrzahl von in Höhenrichtung H nicht verstellbaren Lagerorten 104 umfasst. Die Lagerorte 104 benachbarter Stapel 108 sind dabei jeweils paarweise auf der gleichen Höhe angeordnet, so dass sie insgesamt eine Mehrzahl von in Höhenrichtung H übereinander angeordneten Lagerebenen 110 bilden. In Figur 1 sind beispielhaft zwei dieser Lagerebenen 110 schematisch durch eine gestrichelte Linie angedeutet.

Die oberen Enden 108a und die unteren Enden 108b der Stapel 108 sind jeweils mit einem Förderriemen 112 verbunden, der um zwei Riemenscheiben 114 herum verläuft, wobei in Figur 1 nur die oberen Riemenscheiben zu sehen sind. Durch entsprechende Drehung der Riemenscheiben 114 kann jeder der Stapel 108 in eine Be- und Entladeposition P gebracht werden, in der die Lagerorte 104 des betreffenden Stapels 108 mit der Transfervorrichtung 106 in Wechselwirkung treten können. Infolge dieser Drehung werden die Stapel 108 lokal betrachtet in X-Richtung an der Transfervorrichtung 106 vorüberbewegt.

Die Transfereinrichtung 106 umfasst erfindungsgemäß eine Transfereinheit 116, welche mittels einer Hubeinheit 118 in Höhenrichtung H verstellbar ist. Die Transfereinheit 116 umfasst wiederum eine Hubplattform 120 und eine Eingriffsvorrichtung 122.

Um einen Mover M von der Statoranordnung S in einen vorbestimmten Lagerort 104 überzuführen, wird wie folgt vorgegangen. Zunächst wird der Mover M mittels Magnetschwebetechnologie von der Arbeitsfläche A auf die Hubplattform 120 der Transfereinheit 116 bewegt. Anschließend wird die Transfereinheit 116 mittels der Hubeinheit 118 soweit in Höhenrichtung H verstellt, bis die Hubplattform 120 auf der gleichen Höhe angeordnet ist wie der vorbestimmte Lagerort 104. Nun wird der Mover M mittels der Eingriffsvorrichtung 122 von der Hubplattform 120 zu dem vorbestimmten Lagerort 104 verlagert. In der Darstellung der Figur 1 erfolgt diese Verstellung in der Y-Richtung. Anschließend kehrt die Transfereinheit 116 wieder auf das Höhenniveau der Arbeitsfläche A zurück.

Um einen Mover M von einem vorbestimmten Lagerort 104 auf die Arbeitsfläche A der Statoranordnung S in überzuführen, wird in analoger, aber umgekehrter Reihenfolge der Schritte vorgegangen.

Um den Übergang von der Arbeitsfläche A auf die Hubplattform 120 und/ oder von der Hubplattform 120 zu dem vorbestimmten Lagerort 104 erleichtern zu können, kann die Hubplattform 120 als Förderer, beispielsweise als Bandförderer ausgebildet sein. Ferner kann die Eingriffsvorrichtung 122 ein Greiferelement, beispielsweise einen Sauggreifer umfassen.

Um eine unmittelbare magnetische Wechselwirkung zwischen den in den Movern M verbauten Permanentmagneten und der Lageranordnung 100, d.h. eine auf der Ausrichtung in den Materialien der Lageranordnung 100 vorhandener magnetischer Dipole basierende Wechselwirkung, verhindern zu können, ist die Lageranordnung 100 erfindungsgemäß aus einem nicht magnetisierbaren Material gefertigt. Dies können beispielsweise Kunststoffe, aber auch Metalle wie Kupfer oder Aluminium sein.

Um darüber hinaus auch eine mittelbare Wechselwirkung zwischen den in den Movern M verbauten Permanentmagneten und der Lageranordnung 100, d.h. eine auf magnetischer Induktion basierende Wechselwirkung, verhindern zu können, sollten erfindungsgemäß zumindest jene Abschnitte der Lageranordnung 100, die den Movern M nahekommen, aus einem Material gefertigt sein, dessen elektrische Leitfähigkeit einen vorbestimmten Grenzwert nicht überschreitet, vorzugsweise aus einem elektrisch nicht leitfähigen Material. Das können beispielsweise Kunststoffe sein, aber keine Metalle, in denen Wirbelströme induziert werden können.

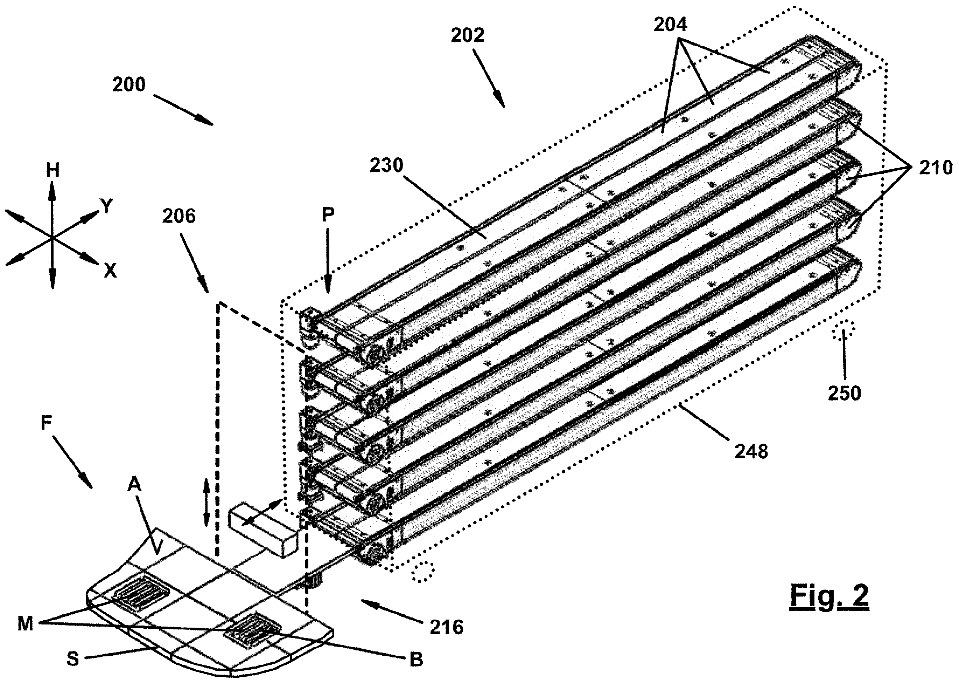

In Figur 2 ist eine zweite Ausführungsform der erfindungsgemäßen Lageranordnung dargestellt, die in wesentlichen Merkmalen der Lageranordnung der Figur 1 entspricht. Daher sind in Figur 2 analoge Teile mit den gleichen Bezugszeichen versehen wie in Figur 1, jedoch vermehrt um 100. Zudem wird die Lageranordnung 200 der Figur 2 im Folgenden nur insoweit beschrieben werden, als sie sich von der Lageranordnung 100 der Figur 1 unterscheidet, auf deren Beschreibung hiermit ansonsten ausdrücklich verwiesen sei.

Die Lageranordnung 200 der Figur 2 unterscheidet sich von der Lageranordnung 100 der Figur 1 lediglich dadurch, dass die Speichervorrichtung 202 nicht als umlaufendes Karussell ausgebildet ist, sondern dass jede der Lagerebenen 210 von einem Förderband 230 gebildet ist, von denen jedes über eine Mehrzahl von Lagerorten 204 verfügt. Dies hat zwar zur Folge, dass die einzelnen Lagerorte 204 nicht individuell angesteuert werden können, sondern jedes der Förderbänder 230 nur nach dem LIFO-Prinzip (Last In First Out) mit Movern M beschickt und von diesen wieder entleert werden kann. Da aber bei einem Formatwechsel üblicherweise eine große Anzahl von identischen Movern eines ersten Typs durch eine große Anzahl von identischen Movern eines zweiten Typs ersetzt wird, stellt dies in der Praxis keine Einschränkung dar.

Hinsichtlich des Aufbaus und der Funktion der Transfervorrichtung 206 sei auf die Beschreibung der Transfervorrichtung 106 und der Transfereinheit 216 der Ausführungsform der Figur 1 verwiesen.

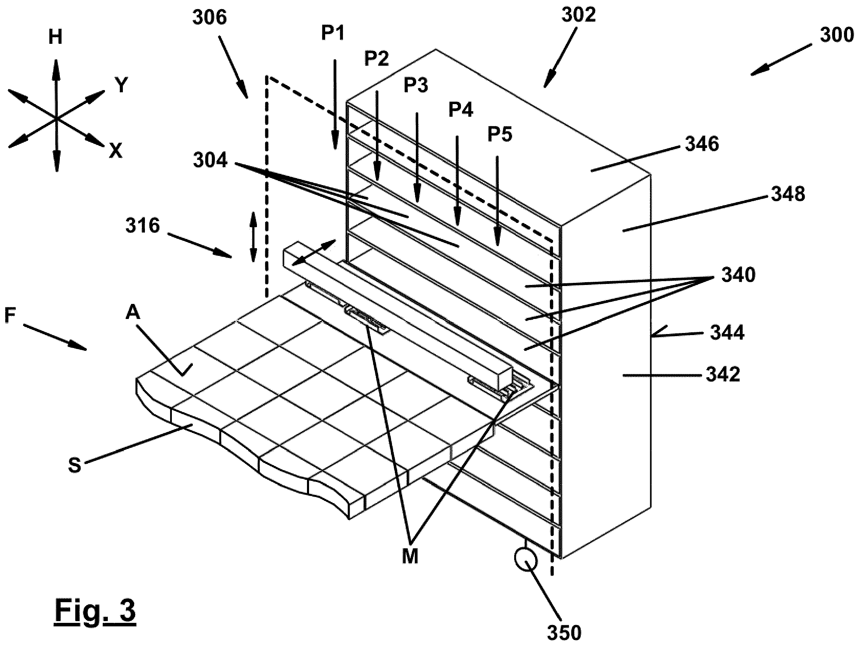

In Figur 3 ist eine dritte Ausführungsform der erfindungsgemäßen Lageranordnung dargestellt, die in wesentlichen Merkmalen der Lageranordnung der Figur 1 entspricht. Daher sind in Figur 3 analoge Teile mit den gleichen Bezugszeichen versehen wie in Figur 1, jedoch vermehrt um 200. Zudem wird die Lageranordnung 300 der Figur 3 im Folgenden nur insoweit beschrieben werden, als sie sich von der Lageranordnung 100 der Figur 1 unterscheidet, auf deren Beschreibung hiermit ansonsten ausdrücklich verwiesen sei.

Die Lageranordnung 300 der Figur 3 unterscheidet sich von der Lageranordnung 300 der Figur 1 dadurch, dass die Speichervorrichtung 302 als Lagerregal mit einer Mehrzahl von in Höhenrichtung H übereinander angeordneten Regalfächern 340 ausgebildet ist, von denen jedes über eine vorbestimmte Anzahl von Lagerorten 304 verfügt.

Die Unbeweglichkeit der Regalfächer 340 im Vergleich zu den Förderbändern 230 der Ausführungsform der Figur 2 wird bei der Ausführungsform der Figur 3 dadurch kompensiert, dass die Transfervorrichtung 306 über eine Mehrzahl von Be- und Entladepositionen P1 bis P5 verfügt, eine für jeden Lagerort 304 jedes Regalfachs 340. Entsprechend ist auch die Transfereinheit 316 dazu ausgebildet, aus jedem dieser Lagerorte 304 gleichzeitig einen Mover M entnehmen bzw. in diese einlagern zu können, bzw. ist hierzu eine zur eine Mehrzahl von Movern M identische Anzahl von Transfereinheiten 316 vorgesehen, die gemeinsam verstellbar sind.

Anzumerken ist ferner, dass die Speichervorrichtung 302 als geschlossenes Regal ausgeführt ist, d.h. über Seitenwände 342, eine Rückwand 344 und eine Deckenwand 346 verfügt. Die Bodenwand wird von dem untersten Regalfach 340 gebildet. Darüber hinaus kann die Speichervorrichtung auch noch über (nicht dargestellte) Fronttüren verfügen. Diese Wandungen bilden zusammen ein Gehäuse 348.

Ferner kann die Speichervorrichtung 302, wie in Figur 3 durch Rollen 350 angedeutet, als mobile Speichervorrichtung ausgebildet sein, die nach dem Einlagern der Mover M von der Fördervorrichtung F weg bzw. zum Auslagern der Mover M zur Fördervorrichtung F hin bewegt werden kann.

Ferner erkennt man in Figur 3, dass die Speichervorrichtung 302 in Y-Richtung so tief ausgebildet ist, dass jeder Lagerort 304 eine Mehrzahl von (hier zwei) in Y-Richtung hintereinander angeordneten Movern M aufnehmen kann.

Nachzutragen ist, dass auch die Speichervorrichtungen 102 gemäß Figur 1 und 202 gemäß Figur 2 mit einem Gehäuse 148 bzw. 248 und/oder Rollen 150 bzw. 250 ausgestattet sein können, wie in den Figuren 1 und 2 durch gepunktete Linien angedeutet ist.

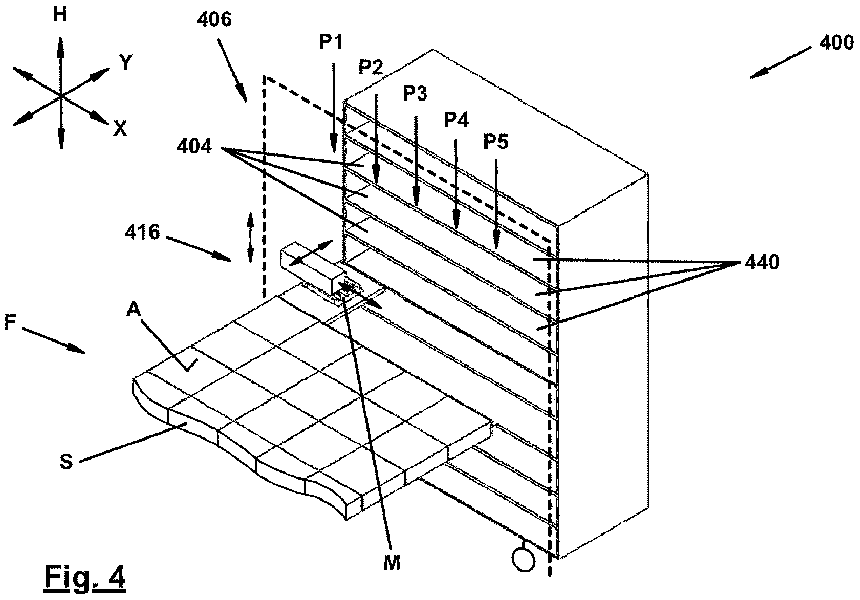

In Figur 4 ist eine Variante der dritten Ausführungsform der erfindungsgemäßen Lageranordnung dargestellt. Daher sind in Figur 4 analoge Teile mit den gleichen Bezugszeichen versehen wie in Figur 3, jedoch vermehrt um 100, d.h. gegenüber Figur 1 um 300. Zudem wird die Lageranordnung 400 der Figur 4 im Folgenden nur insoweit beschrieben werden, als sie sich von der Lageranordnung 300 der Figur 3 unterscheidet, auf deren Beschreibung hiermit ansonsten ausdrücklich verwiesen sei.

Der einzige Unterschied zur Ausführungsform der Figur 3 besteht darin, dass die Transfereinheit 416 der Transfervorrichtung 406 der Lageranordnung 400 gleichzeitig lediglich einen einzigen Mover M zu bewegen vermag. Um dennoch alle Lagerorte 404 der Regalfächer 440 mit Movern M beschicken zu können, ist die Transfervorrichtung 406 derart ausgebildet, dass sie die Transfereinheit 416 nicht nur in Höhenrichtung H, sondern auch in X-Richtung zu verstellen vermag.

## Patentansprüche

1. Lageranordnung (100) zum Lagern von nicht zur Lageranordnung (100) gehörenden Movern (M) einer in Magnetschwebetechnologie ausgebildeten, ebenfalls nicht zur Lageranordnung (100) gehörenden Fördervorrichtung (F), die Lageranordnung (100) umfassend
• eine Speichervorrichtung (102) mit einer Mehrzahl von in Höhenrichtung (H) übereinander angeordneten Lagerebenen (110) mit jeweils einer Mehrzahl von Lagerorten (104) und
• eine Transfervorrichtung (106), die dazu ausgebildet ist, wenigstens einen der Mover (M) von einer Arbeitsfläche (A) der Fördervorrichtung (F) in wenigstens einen der Lagerorte (104) oder von wenigstens einem der Lagerorte (104) auf die Arbeitsfläche (A) der Fördervorrichtung (F) zu transferieren,
wobei die Lageranordnung (100) aus einem nicht magnetisierbaren Material gefertigt ist,
**dadurch gekennzeichnet, dass** die Lagerorte (104) der Speichervorrichtung (102) in Höhenrichtung (H) fest angeordnet sind und dass die Transfervorrichtung (106) eine in Höhenrichtung (H) verstellbare Transfereinheit (116) umfasst.

2. Lageranordnung nach Anspruch 1,
**dadurch gekennzeichnet, dass** diejenigen Teile der Lageranordnung (100), deren Abstand zu den Movern (M) im Betrieb einen vorbestimmten Wert unterschreiten kann, vorzugsweise die gesamte Lageranordnung (100), aus einem Material gefertigt sind, dessen elektrische Leitfähigkeit einen vorbestimmten Grenzwert nicht überschreitet, vorzugsweise aus einem elektrisch nicht leitfähigen Material.

3. Lageranordnung nach Anspruch 1 oder 2,
**dadurch gekennzeichnet, dass** die Lagerorte (104; 204) der Speichervorrichtung (102; 202) in wenigstens einer von der Höhenrichtung (H) verschiedenen (X; Y) Richtung verstellbar sind.

4. Lageranordnung nach Anspruch 3,
**dadurch gekennzeichnet, dass** die Verstellbarkeit der Lagerorte (204) derart ausgebildet ist, dass die Lagerorte (204) in einer von der Transfervorrichtung (206) weg bzw. auf diese zu weisenden linearen Richtung (Y) bewegbar sind.

5. Lageranordnung nach Anspruch 3,
**dadurch gekennzeichnet, dass** die Verstellbarkeit der Lagerorte (104) derart ausgebildet ist, dass die Lagerorte (104) längs einer an der Transfervorrichtung (106) vorbeiführenden in sich geschlossenen Bahn bewegbar sind.

6. Lageranordnung nach Anspruch 1 oder 2,
**dadurch gekennzeichnet, dass** die Transfereinheit (416) der Transfervorrichtung (406) neben der Verstellbarkeit in Höhenrichtung (H) auch in wenigstens einer von der Höhenrichtung (H) verschiedenen Richtung (X) verstellbar ist.

7. Lageranordnung nach Anspruch 1 oder 2,
**dadurch gekennzeichnet, dass** die Transfervorrichtung (306) eine Mehrzahl von, vorzugsweise gemeinsam, in Höhenrichtung (H) verstellbaren Transfereinheiten (316) aufweist.

8. Lageranordnung nach einem der Ansprüche 1 bis 7,
**dadurch gekennzeichnet, dass** die Speichervorrichtung (302) mobil ausgebildet ist.

9. Lageranordnung nach einem der Ansprüche 1 bis 8,
**dadurch gekennzeichnet, dass** die Speichervorrichtung (302) zumindest teilweise von Begrenzungswandungen (342, 344, 346) umhüllt ist.

10. Lageranordnung nach einem der Ansprüche 1 bis 9,
**dadurch gekennzeichnet, dass** die Transfereinheit (116) ein Greiferelement aufweist.

11. Lageranordnung nach einem der Ansprüche 1 bis 10,
**dadurch gekennzeichnet, dass** jeder Lagerort (304) zur Aufnahme einer Mehrzahl von Movern (M) ausgebildet ist.

## Claims

1. Storage arrangement (100) for storing movers (M) not belonging to the storage arrangement (100) of a conveying device (F) formed in magnetic levitation technology and also not belonging to the storage arrangement (100), the storage arrangement (100) comprising:
• a storage device (102) having a plurality of storage levels (110) arranged one above the other in the height direction (H), each having a plurality of storage locations (104), and
• a transfer device (106) that is designed to transfer at least one of the movers (M) from a work surface (A) of the conveying device (F) to at least one of the storage locations (104) or from at least one of the storage locations (104) to the work surface (A) of the conveying device (F),
wherein the storage arrangement (100) is made of a non-magnetizable material, **characterized in that** the storage locations (104) of the storage device (102) are fixedly arranged in the height direction (H) and **in that** the transfer device (106) comprises a transfer unit (116) that can be adjusted in the height direction (H).

2. Storage arrangement according to claim 1,
**characterized in that** those parts of the storage arrangement (100) whose distance from the movers (M) can fall below a predetermined value during operation, preferably the entire storage arrangement (100), are made of a material whose electrical conductivity does not exceed a predetermined limit value, preferably of an electrically non-conductive material.

3. Storage arrangement according to claim 1 or 2,
**characterized in that** the storage locations (104; 204) of the storage device (102; 202) can be adjusted in at least one (X; Y) direction different from the height direction (H).

4. Storage arrangement according to claim 3,
**characterized in that** the adjustability of the storage locations (204) is designed such that the storage locations (204) can be moved in a linear direction (Y) away from or toward the transfer device (206).

5. Storage arrangement according to claim 3,
**characterized in that** the adjustability of the storage locations (104) is designed such that the storage locations (104) can be moved along a closed path passing the transfer device (106).

6. Storage arrangement according to claim 1 or 2,
**characterized in that** the transfer unit (416) of the transfer device (406) can also be adjusted in at least one direction (X) different from the height direction (H) in addition to the adjustability in the height direction (H).

7. Storage arrangement according to claim 1 or 2,
**characterized in that** the transfer device (306) has a plurality of transfer units (316) that are preferably jointly adjustable in the height direction (H).

8. Storage arrangement according to any of claims 1 to 7,
**characterized in that** the storage device (302) is designed to be mobile.

9. Storage arrangement according to any of claims 1 to 8,
**characterized in that** the storage device (302) is at least partially enclosed by boundary walls (342, 344, 346).

10. Storage arrangement according to any of claims 1 to 9,
**characterized in that** the transfer unit (116) has a gripper element.

11. Storage arrangement according to any of claims 1 to 10,
**characterized in that** each storage location (304) is designed to receive a plurality of movers (M).

## Revendications

1. Ensemble de stockage (100) destiné à stocker des dispositifs de déplacement (M), n'appartenant pas à l'ensemble de stockage (100), d'un dispositif de transport (F) conçu selon la technologie de lévitation magnétique et n'appartenant pas non plus à l'ensemble de stockage (100), l'ensemble de stockage (100) comprenant
• un dispositif de stockage (102) comportant une pluralité de niveaux de stockage (110) qui sont superposés dans la direction en hauteur (H) et qui présentent chacun une pluralité d'emplacements de stockage (104), et
• un dispositif de transfert (106) conçu pour transférer l'un au moins des dispositifs de déplacement (M) d'une surface de travail (A) du dispositif de transport (F) vers l'un au moins des emplacements de stockage (104), ou pour le transférer de l'un au moins des emplacements de stockage (104) vers la surface de travail (A) du dispositif de transport (F),
l'ensemble de stockage (100) étant fabriqué dans un matériau non magnétisable,
**caractérisé en ce que** les emplacements de stockage (104) du dispositif de stockage (102) sont disposés de manière fixe dans la direction en hauteur (H), et
**en ce que** le dispositif de transfert (106) comprend une unité de transfert (116) réglable dans la direction en hauteur (H).

2. Ensemble de stockage selon la revendication 1,
**caractérisé en ce que** les parties de l'ensemble de stockage (100) dont la distance par rapport aux dispositifs de déplacement (M) peut être inférieure à une valeur prédéterminée pendant le fonctionnement, de préférence la totalité de l'ensemble de stockage (100), sont fabriquées dans un matériau dont la conductivité électrique ne dépasse pas une valeur limite prédéterminée, de préférence dans un matériau non conducteur d'électricité.

3. Ensemble de stockage selon la revendication 1 ou 2,
**caractérisé en ce que** les emplacements de stockage (104 ; 204) du dispositif de stockage (102 ; 202) sont réglables dans au moins une direction (X ; Y) différente de la direction en hauteur (H).

4. Ensemble de stockage selon la revendication 3,
**caractérisé en ce que** la possibilité de réglage des emplacements de stockage (204) est conçue de telle sorte que les emplacements de stockage (204) peuvent être déplacés dans une direction linéaire (Y) s'éloignant du dispositif de transfert (206) ou se dirigeant vers celui-ci.

5. Ensemble de stockage selon la revendication 3,
**caractérisé en ce que** la possibilité de réglage des emplacements de stockage (104) est conçue de telle sorte que les emplacements de stockage (104) peuvent être déplacés le long d'une trajectoire fermée sur elle-même et passant devant le dispositif de transfert (106).

6. Ensemble de stockage selon la revendication 1 ou 2,
**caractérisé en ce que** l'unité de transfert (416) du dispositif de transfert (406) est réglable non seulement dans la direction en hauteur (H), mais également dans au moins une direction (X) différente de la direction en hauteur (H).

7. Ensemble de stockage selon la revendication 1 ou 2,
**caractérisé en ce que** le dispositif de transfert (306) comporte une pluralité d'unités de transfert (316) réglables, de préférence conjointement, dans la direction en hauteur (H).

8. Ensemble de stockage selon l'une des revendications 1 à 7,
**caractérisé en ce que** le dispositif de stockage (302) est mobile.

9. Ensemble de stockage selon l'une des revendications 1 à 8,
**caractérisé en ce que** le dispositif de stockage (302) est au moins partiellement entouré de parois de délimitation (342, 344, 346).

10. Ensemble de stockage selon l'une des revendications 1 à 9,
**caractérisé en ce que** l'unité de transfert (116) comporte un élément de préhension.

11. Ensemble de stockage selon l'une des revendications 1 à 10,
**caractérisé en ce que** chaque emplacement de stockage (304) est conçu pour recevoir une pluralité de dispositifs de déplacement (M).
